# EUROPEAN PATENT APPLICATION

(11) **EP 3 289 882 A1**
(43) Date of publication of application: **07.03.2018**
(21) Application number: 15898190.2
(22) Date of filing: 30.04.2015
(51) Int. Cl.: A22C 25/08, B07B 13/05

(54) **APPARATUS FOR FEEDING FISH TO FISH PROCESSING MACHINE**

(71) Applicant: Peruza, Sia, 2137 Rigas raj. (LV)
(72) Inventor: BORMANIS, Artis, 2137 Rigas raj. (LV)
(74) Representative: Osmans, Voldemars
(86) International application number: PCT/IB2015/053154
(87) International publication number: WO 2017/009685

(57) **Abstract**

A device for feeding fish to the working members (10, 11) of a fish processing machine comprises a first conveyor (1) with individual cells (2), which is capable of moving in a first direction, and a second conveyor (6) with a flat moving surface (7), which is capable of moving in a second direction that is oriented at an angle to the first direction, wherein the first conveyor (1) is positioned above the second conveyor (6) such that the lower surface of the first conveyor (1) is close to or touches the upper surface (7) of the second conveyor (6). Also proposed is a method for feeding fish to a fish processing machine. The invention can be used in fish processing facilities.

## Description

### Technical Field

The device relates to the fish processing industry, in particular, to devices that feeding fish to the working members of a fish processing machine.

### Background

During automated fish processing fish is fed to the working members of a fish processing machine, for example, to knives cutting away heads and tails, by means of individual compartments or cells connected to a closed conveyor loop. Herein, it is important to provide a specific orientation of fish in a cell.

A known fish feeding device is described in patent US1416687 where head forward oriented fish goes along a tilted chute to individual cells on a moving conveyor, and rotating knives that cut away fish heads are mounted above the cell conveyor. A disadvantage of this device is that a fish falls from the chute to a cell that is moving relative to the chute; therefore, the fish, first, experiences a rather strong mechanical impact, and, second, the fish position in the cell may change due to relative position of the cell and the chute at the moment when the fish passes.

Another fish processing device is described in patent US3561041 where the fish moving one after another and oriented with their heads forward along a tilted chute and reach individual compartments or cells on a moving cell conveyor where they are fed to the knives that cut away heads and tails. For the fish to take a required position at an edge of a cell, directed water jets are used. A disadvantage of this device is that a fish falls from the chute to a cell that is moving relative to the chute; therefore, the fish, first, experiences a rather strong mechanical impact, and, second, the fish fall in a different way, and therefore a fish can take a position that cannot be corrected with water jets.

The closest to the proposed technical solution is the fish feeding device according to patent application CA2172922 wherein the fish oriented with their heads forward are individually forwarded to the cells of a moving conveyor by a guiding device equipped with a belt conveyor with periodically arranged studs. When the device is in operation a spring loaded catching device stops a fish at the entry of the guiding device and keeps it till the conveyor studs pick it up and release it from the resistance exerted by the tilting device, to transfer it to the exit of the guiding device where the stud belt moves downwards, and the fish free of the studs is moved by inertia to individual cells on the fish processing machine conveyor. As the motion of the belt conveyor is synchronized with the motion of the cell conveyor the latter is located in a definite position relative to the guiding device at the moment when fish is loaded to the cell. A disadvantage of this device is fish damage by the studs and fish mechanical damage when it hits against the cell walls, as well as a necessity to stop fish while waiting for the cell to reach a definite position.

The object of the invention is to simplify the device design and improve its operation. In particular, the object of the invention is to create a device for feeding fish to a fish processing machine working members that is able to provide a more definite fish positioning in individual cells, and to reduce fish damage from mechanical impacts as well as to feed fish to the cells without stopping fish before feeding to the cells.

### Summary of Invention

The technical result is achieved in the device for feeding fish to the working members of the fish processing machine comprising a first conveyor with individual cells capable of moving in a first direction, and a second conveyor with a flat moving surface capable of moving in a second direction that is oriented at an angle to the first direction, wherein the first conveyor is positioned above the second conveyor such that the lower surface of the first conveyor is close to or touches the upper surface of the second conveyor.

The first conveyor is preferably equipped with a step drive, enabling the stepwise movement of the first conveyor by a width of one cell. The conveyor's stepwise movement improves the device efficiency as the next empty cell that follows the one loaded with fish is moved to the loading position in the quickest possible way. Herein, it is convenient to use a fish passage sensor to register fish trapping in the cell of the first conveyor that will be triggered when a fish passes a specific place, for example, on entering the cell of the first conveyor.

Preferably, the device for feeding fish further comprises a guiding device in a form of a corridor disposed over the surface of the second conveyor. The use of such guiding device will provide a well-defined fish positioning before trapping to a cell of the first conveyor which contributes to placing fish in the cell in a definite position. Herein, the fish passage sensor may be mounted at the exit of the guiding device.

It is convenient to control the device operation by means of an allocated control unit that is connected to the first conveyor drive and the fish passage sensor and provides a transfer of the first conveyor by one cell on triggering the fish passage sensor. It is possible to employ a separate control unit connected to the fish passage sensor and the first conveyor drive that provides the conveyor transfer by one cell upon a signal received from the fish passage sensor. However, the control unit function may be performed by the common computer of the fish processing machine or the computer that controls the entire operation of the fish processing facility, for example.

It is preferable that the first direction is oriented perpendicular to the second direction. Such arrangement appears to be optimum.

Another aspect of this invention is a method of feeding fish to the working members of the fish processing machine that comprises the following steps:
a) a longitudinal transfer of a fish lying on the moving surface of the second conveyor till the fish reaches a cell of the first conveyor,
6) a transversal transfer of the fish trapped in the cell along the longitudinally moving surface of the second conveyor together with the cell of the first conveyor to the edge of the second conveyor,
c) a transfer of the fish over the edge of the second conveyor to the operative parts of the fish processing machine.

Fish transfer by the first conveyor upon the surface of the second conveyor has a number of advantages. First, such transfer allows design simplification of the first conveyor which, in its turn, will allow using a step drive to move the first conveyor. The simplified design and the step drive together allow reducing the first conveyor overall dimensions and increasing its operation speed. Second, a fish is lying still during the entire process when it is transferred to a cell of the first conveyor and it is not subject to severe mechanical impacts which contributes to improving the quality of the final product. Third, the action of the moving surface of the second conveyor on the fish in the cell during its transfer to the working members provides a precise and uniform fish placement in the cell which, in its turn, will improve the quality of its processing.

Preferably, the longitudinal transfer of fish is carried out by a linear movement of the second conveyor, and its transversal transfer is carried out by a stepwise movement of the first conveyor.

It is convenient to control the first conveyor drive with an electronic control unit upon a signal from a fish passage sensor that may be mounted on the guiding device, for example.

### Brief Description of Drawings

Figure 1 presents the general view of the device.
Figure 2 presents the top view of the device.
Figure 3 presents the elevation view of the device.
Figure 4 presents the device control scheme.

### Embodiment of Invention

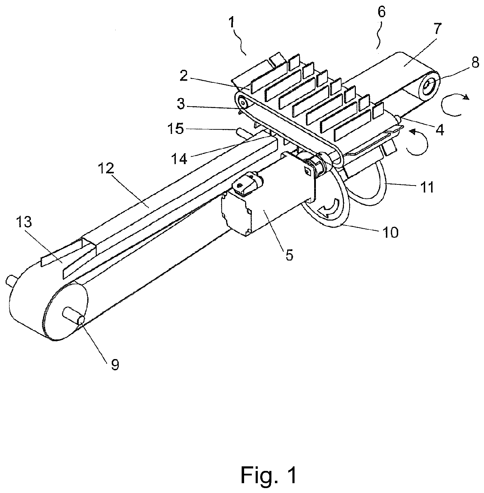

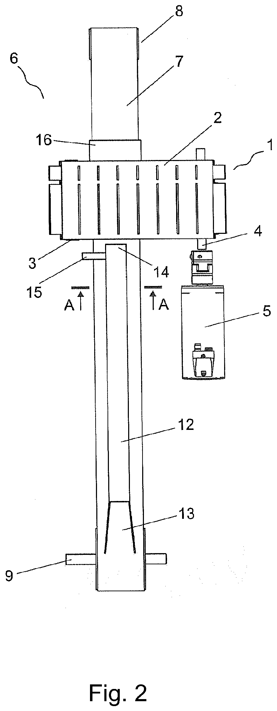

As it is shown in Fig. 1 and Fig. 2, the device for feeding fish to the working members of the fish processing machine comprises the first conveyor 1 with individual cells 2 connected in an endless circuit that is tensioned on pulleys 3 and 4. Pulley 4 is connected to drive 5 that provides pulley 4 rotation thus causing a transfer of the lower part of conveyor 1 in the direction away from pulley 3 towards pulley 4. The first conveyor 1 with individual cells 2 is located over the second conveyor 6 with flat surface 7. Moving surface 7 of the second conveyor 6 comprises an elastic belt closed in a loop and tensioned on pulleys 8 and 9. Pulley 8 is connected to an electric motor (not shown) that provides rotation of pulley 8, thus causing a transfer of upper part 7 in the direction away from pulley 9 towards pulley 8. Working members of the fish processing machine, in this case two rotating knives 10 and 11 are located under conveyor 1 close to the side edge of conveyor 2. Knife 10 is for cutting off fish tails, and knife 11 is for cutting off fish heads.

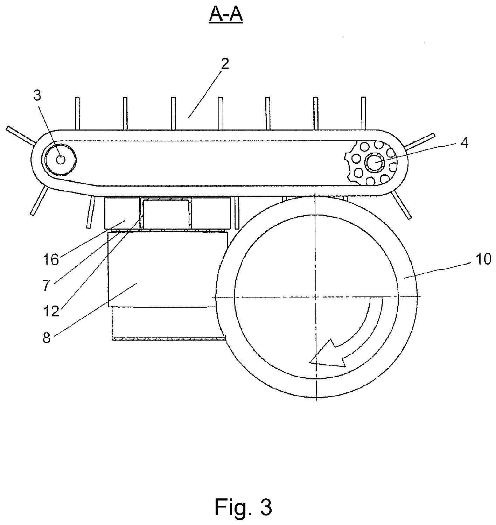

To provide a more precise fish feeding to cells 2 of conveyor 1, guiding device 12 is disposed over conveyor 6 moving surface 7, that guiding device is made in the form of a corridor shaped like an upside-down chute. The dimensions of the guiding device are selected as to allow passing through the corridor one fish at a time; preferably in on its side. Entry 13 of the guiding device is equipped with a funnel-shaped collector to prevent fish being stuck at entry 13 of guiding device 12. Exit 14 of the guiding device is equipped with fish passage sensor 15. Exit 14 is located in the immediate vicinity to the front edge of the first conveyor 1. As shown in Fig. 3, limiter 16 is mounted immediately over surface 7 of the second conveyor 6 on the side of the rear edge of the first conveyor 1.

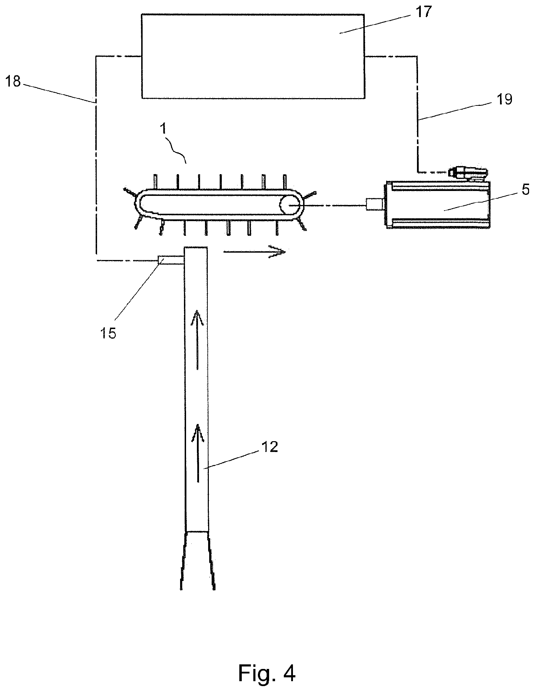

Fig. 4 shows the general scheme of the device control. It includes control unit 17 connected to fish passage sensor 15 by signal line 18, and drive 5 of the first conveyor 1 connected to control unit 17 by signal line 19. A step electric motor is used as drive 5 to provide conveyor 1 transfer to a distance equal to the width of one cell 2 at one motor step 2.

The proposed device operates as follows. The fish aimed for processing is fed one by one, with heads forward, to entry 13 of guiding device 12. Then fish moves together with moving surface 7 of the second conveyor 6 and transfers on the second conveyor 6 towards the first conveyor 1. After the fish is loaded into assigned cell 2 of the first conveyor 6 its further transfer on the second conveyor will be stopped by limiter 16. Then the first conveyor moves by one step or by a distance of one cell towards the edge of the second conveyor 6. Thus, loaded cell 2 is transferred by one step towards knives 10, 11, and free cell 2 takes a position against entry 14 of guiding device 12 waiting for the next fish.

### Industrial Applicability

The invention may be used at fish processing enterprises to feed fish to working members on a fish processing machine and may be used, for example, to process Baltic herrings, capelins, sardines, anchovies or sprats.

### List of Drawing Positions

- 1: the first conveyor
- 2: cell
- 3: pulley
- 4: pulley
- 5: drive of the first conveyor
- 6: the second conveyor
- 7: moving surface of the second conveyor
- 8: pulley
- 9: pulley
- 10: knife
- 11: knife
- 12: guiding device
- 13: entry of the guiding device
- 14: exit of the guiding device
- 15: fish passage sensor
- 16: limiter
- 17: control unit
- 18: signal line
- 19: signal line

## Claims

1. A device for feeding fish to the working members of a fish processing machine comprising:
a first conveyor with individual cells capable of moving in a first direction, and
a second conveyor with a flat moving surface capable of moving in a second direction that is oriented at an angle to the first direction, **characterised in that**
the first conveyor is positioned above the second conveyor such that the lower surface of the first conveyor is close to or touches the upper surface of the second conveyor.

2. The device according to claim 1, wherein the first conveyor is equipped with a step drive that provides for stepwise transfer of the first conveyor by a width of one cell.

3. The device according to claim 2, further comprising a fish passage sensor to register fish trapping in a cell of the first conveyor.

4. The device according to claim 3, further comprising a guiding device in a form of a corridor disposed over the surface of the second conveyor.

5. The device according to claim 4, further comprising a control unit connected to a drive of the first conveyor and the fish passage sensor such that provide a transfer of the first conveyor by one cell upon a signal from the fish passage sensor.

6. The device according to claim 2, further comprising a guiding device in a form of a corridor disposed over the surface of the second conveyor, a fish passage sensor mounted on the guiding device, and a control unit connected to the drive of the first conveyor and a fish passage sensor such that provide a transfer of the first conveyor by one cell upon a signal from the fish passage sensor.

7. The device according to any of claims 1-6, wherein the first direction is perpendicular to the second direction.

8. A method of feeding fish to the working members of a fish processing machine comprising the following steps:
a longitudinal transfer of a fish lying on the moving surface of the second conveyor till the fish is trapped in a cell of the first conveyor,
a transversal transfer of the fish trapped in the cell on the longitudinally moving surface of the second conveyor together with the cell of the first conveyor to the edge of the second conveyor,
fish transfer over the edge of the second conveyor to the working members of the fish processing machine.

9. The method according to claim 7, wherein the fish longitudinal transfer is carried out by the linear movement of the second conveyor and the transversal transfer is carried out by a stepwise movement of the first conveyor.

10. The method according to claim 8, wherein the control of the first conveyor drive is provided by an electronic control unit upon a signal from a fish passage sensor.

11. The method according to claim 10, wherein the fish passage sensor is disposed on a guiding device.
